# EUROPEAN PATENT APPLICATION

(11) **EP 3 316 587 A1**
(43) Date of publication of application: **02.05.2018**
(21) Application number: 16306406.6
(22) Date of filing: 27.10.2016
(51) Int. Cl.: H04N 21/262, H04N 21/414, H04N 21/258, H04N 21/45

(54) **METHOD FOR MANAGING STAGGERCAST TRANSMISSIONS IN A COMMUNICATION NETWORK COMPRISING A CENTRAL DEVICE AND A PLURALITY OF USER TERMINALS**

(71) Applicant: Thomson Licensing, 92130 Issy-les-Moulineaux (FR)
(72) Inventor: QUINQUIS, Cyril, 35576 Cesson-Sévigné (FR); FONTAINE, Loic, 35576 Cesson-Sévigné (FR)
(74) Representative: Huchet, Anne

(57) **Abstract**

A method for managing staggercast transmissions in a communication network comprises a central device (30) and a plurality of user terminals (T_{A}, T_{B}, T_{C}). The central device comprises a staggercast transmitter (100) and each of the user terminals comprises a staggercast receiver (200_{A}, 200_{B}, 200_{C}). The central device performs, at least for a given user terminal: determining and storing a profile comprising at least one piece of information relating to the given user terminal; and adjusting at least one staggercast parameter based on the profile, for a content transmission by the staggercast transmitter towards the staggercast receiver comprised in the given user terminal.

## Description

### 1. TECHNICAL FIELD

The present invention relates to the field of digital transmission, and more particularly to a technique called "staggercasting". As detailed below, staggercasting offers a method of protection against signal loss by transmitting (with a staggercast transmitter) a secondary stream (also referred to as "stagger stream") which is time-shifted and redundant with respect to a primary stream (also referred to as "main stream"). This allows a staggercast receiver to pre-buffer packets of the stagger stream to replace packets of the main stream lost in transmission.

More specifically, the present invention relates to a solution (method and central device) for managing staggercast transmissions in a communication network comprising a central device (e.g. a set-top-box, a gateway or a server) and a plurality of user terminals (e.g. computers, smartphones, tablets, headphones, or any devices that can be connected to the central device), the central device comprising a staggercast transmitter and each user terminal comprising a staggercast receiver.

### 2. TECHNOLOGICAL BACKGROUND

At home, in residential buildings or in commercial buildings, different users with different user terminals (devices) can connect (through a wireless connection) to a central device (set-top-box, gateway, server, etc.) to watch a live program, a recorded content or listen to music.

Each of these users has his own habits in term of displacements in the building or in term of applications usage. Each of these users also uses his own user terminal (computer, smartphone, tablet, etc.), the latter having its own technical features. Displacements, some applications usage or the type of user terminal may have an impact on the audio and/or video rendering and the user experience. Indeed the user may go through an area where the wireless connection is poor or with interferences, this may create data losses, and bad artifacts. Specific applications usage and the type of user terminal are parameters that may impact the energy consumption of the user terminals and consequently shorten the user terminal usage.

In other words, the different users may live different experiences of what they watch or what they listen:
- some of them are going through an area where the wireless signal is poor, or are in a room with interferences;
- some of them are using a tablet which consumes a lot of energy while watching a TV program;
- some of them increase the brightness of their display, some others don't;
- some of them listen to loud music, some others don't;
- some of them listen to music with connected headphones;
- some user terminals are only used in the garden, some in the building basement;
- etc.

Those non-exhaustive use cases may create different bad artifacts due to the loss of data or the loss of energy.

The staggercast method may palliate those losses or may help decreasing their impact, in order to improve the user experience in such cases. Indeed, in case of data losses, it will correct the damaged stream. And in case of energy loss, the user terminal may switch automatically to the stagger stream, which may have been encoded with a lower resolution and is therefore less difficult to decode, so demands less energy.

The staggercast method includes a first signal (main stream) and a second signal (stagger stream), where the first signal is delayed (a stagger delay is applied to it). Thus the stagger stream is in advance of the main stream. In case of error detection (for instance signal losses) in the first signal the second encoded signal is used. The second signal, which is basically used to repair the first signal, may also be used to save power. Indeed it may be encoded with a resolution (referred to as "stagger stream resolution") lower than the "main stream resolution. Thus when the battery level starts to be low, the user terminal may switch automatically to the stagger stream. In other words, when using the staggercast method, one can adjust staggercast parameters of the staggercast transmitter, which are the stagger delay and the stagger stream resolution.

A drawback of the known staggercast method is that, when adjusted (i.e. set), each staggercast parameter of the staggercast transmitter takes a single value, which is used for all transmissions of the staggercast transmitter towards the plurality of staggercast receivers. Therefore, in the context of staggercast transmissions in a communication network comprising a central device (comprising a staggercast transmitter) and a plurality of user terminals (each comprising a staggercast receiver), the known staggercast method does not offer an optimal user experience improvement for all the users.

### 3. SUMMARY

A particular aspect of the present disclosure relates to a method for managing staggercast transmissions in a communication network comprising a central device and a plurality of user terminals, said central device comprising a staggercast transmitter and each of said user terminals comprising a staggercast receiver. The central device performs, at least for a given user terminal:
- determining and storing a profile comprising at least one piece of information relating to said given user terminal; and
- adjusting at least one staggercast parameter based on said profile, for a content transmission by said staggercast transmitter towards the staggercast receiver comprised in said given user terminal.

The general principle of the proposed solution is to adjust differently at least one of the staggercast parameters for each user terminal (or at least for some of them). To achieve this, each user terminal (or at least some of them) has an associated profile and the central device adjusts the staggercast parameter(s) based on this profile for all transmissions intended to this user terminal. Thus, the different staggercast receivers better palliate (or better decrease the impact of) the data losses and/or energy losses than with the known solution (single value for each staggercast parameter, whatever the staggercast transmissions). In other words, the user experience is improved for all the staggercast receivers, and hence also for all users of the user terminals comprising these staggercast receivers.

According to a particular feature, said at least one piece of information belongs to the group comprising:
- pieces of information relating to at least one specificity of said given user terminal; and
- pieces of information relating to at least one use of said given user terminal.

According to a particular feature, said central device belongs to the group comprising a set-top-box, a gateway and a server.

According to a particular feature, said at least one staggercast parameter belongs to the group comprising:
- a stagger delay, between a transmission of a stagger stream and a transmission of a delayed main stream; and
- a stagger stream resolution.

According to a particular feature, said at least one piece of information belongs to the group comprising (this list is not exhaustive):
- a minimal duration of signal losses for said given user terminal;
- a maximal duration of signal losses for said given user terminal;
- a power level of a battery comprised in said given user terminal;
- a type of a battery comprised in said given user terminal;
- a type of device for said given user terminal;
- an application executed by said given user terminal; and
- using habits relating to a use of said given user terminal by at least one user.

According to a particular feature, said central device performs a dynamical gathering of said at least one piece of information, through a communication between said central device and said given user terminal.

Thus, the adjustment of the at least one staggercast parameter can be easily modified (changed over time) in a different manner for each user terminal.

Another aspect of the present disclosure relates to a computer program product comprising program code instructions for implementing the above-mentioned method for managing staggercast transmissions (in any of its different embodiments) when said program is executed on a computer or a processor.

Another aspect of the present disclosure relates to a non-transitory computer-readable carrier medium, storing the aforesaid computer program product.

Another aspect of the present disclosure relates to a central device of a communication network comprising said central device and a plurality of user terminals, said central device comprising a staggercast transmitter and each of said user terminals comprising a staggercast receiver. The central device comprises a computation machine configured to:
- determine and store, at least for a given user terminal, a profile comprising at least one piece of information relating to said given user terminal; and
- adjust at least one staggercast parameter based on said profile, for a content transmission by said staggercast transmitter towards the staggercast receiver comprised in said given user terminal.

Advantageously, the central device comprises means for implementing the steps it performs in the above method for managing staggercast transmissions, in any of its various embodiments.

According to a particular feature, said computation machine is configured to perform a dynamical gathering of said at least one piece of information, through a communication between said central device and said given user terminal.

### 4. LIST OF FIGURES

Other features and advantages of embodiments shall appear from the following description, given by way of indicative and non-exhaustive examples and from the appended drawings, of which:
- Figure 1 illustrates a prior art staggercast transmitter;
- Figure 2 illustrates a prior art staggercast receiver;
- Figure 3 provides a schematic illustration of a communication network implementing a method for managing staggercast transmissions according to a particular embodiment;
- Figure 4 is a flowchart of a particular embodiment of the proposed method; and
- Figure 5 shows the simplified structure of a computation machine comprised in a central device according to a particular embodiment.

### 5. DETAILED DESCRIPTION

In all of the figures of the present document, similar elements and steps are designated by the same numerical reference sign.

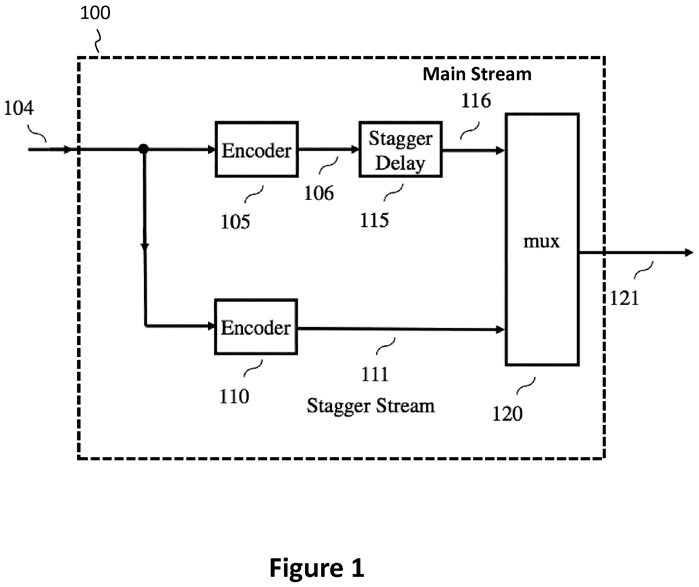

An illustrative prior art staggercast transmitter 100 is shown in **figure 1**. The elements shown in the figure are well known and will not be described in detail. In figure 1, the staggercast transmitter 100 illustratively comprises encoders 105 and 110, stagger delay circuit 115 and multiplexer (mux) 120. A signal 104 is applied to encoders 105 and 110, which encode the signal to provide encoded signals 106 and 111 (stagger stream), respectively. For illustration purposes, these encoders perform the same type of encoding, although this is not required (e.g. the stagger stream 111 may be encoded with a lower resolution than the stream 106). Encoded signal 106 is then delayed in time by stagger delay circuit 115 to provide main stream 116. This stagger delay can be adjustable or fixed. As a result of being delayed, the stagger stream 111 is now "in advance" of the main stream 116. Mux 120 multiplexes the main stream and the stagger stream to provide output stream 121 for transmission (broadcast), i.e. the transmitted stream.

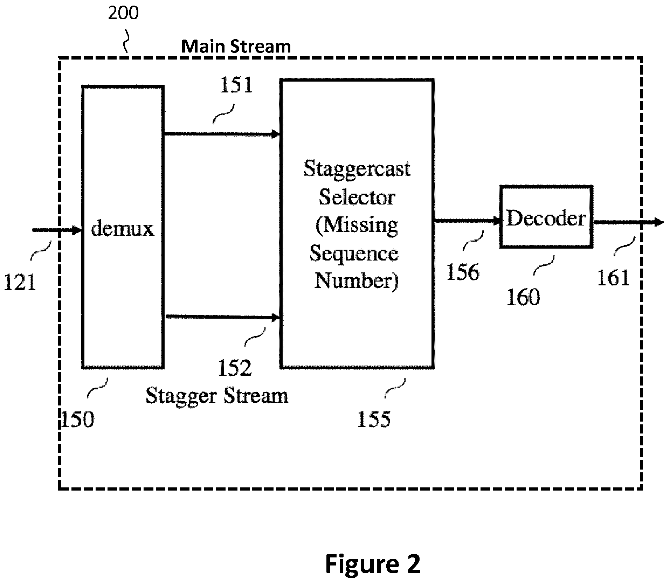

Turning now to **figure 2****,** an illustrative prior art staggercast receiver 200 is shown. The staggercast receiver comprises demultiplexer (demux) 150, staggercast selector 155 and decoder 160. The transmitted stream (the transmission medium, e.g., broadcast, internet, etc., is not shown in figure 2) is received by demux 150, which demultiplexes the received transmitted stream 121 and provides main stream 151 and stagger stream 152. Therefore, in case of loss due to physical disruptions, a correction can be made on the receiver side by staggercast selector 155 by inserting data from stagger stream 152 in the main stream 151. In particular, staggercast selector 155 detects "holes" in main stream 151 when a discontinuity is found in the sequence number of received transport packets in main stream 151. Since packets from stagger stream 152 were received earlier, staggercast selector 155 inserts the correct packet from stagger stream 152 for the missing packet in main stream 151 and provides output signal 156 to decoder 160. In this way, missing packets from main stream 151 can be replaced by using the corresponding packets received earlier from stagger stream 152. Thus, the quality of experience (QoE) for the user is maintained and decoder 160 provides a decoded stream 161 (e.g., for additional processing (not shown)) for viewing by a user.

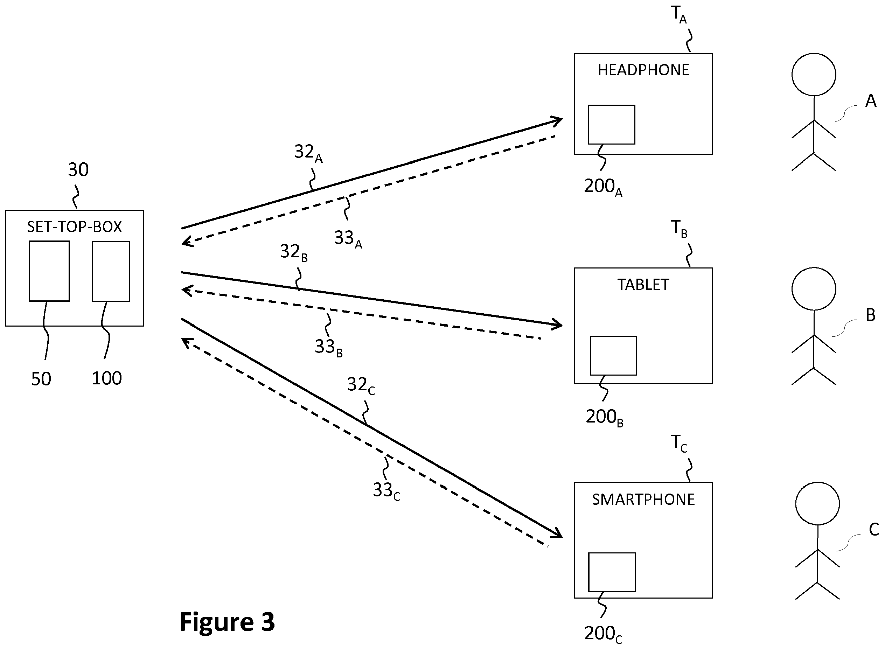

**Figure 3** provides a schematic illustration of a communication network implementing a method for managing staggercast transmissions according to a particular embodiment.

The communication network comprises a central device (e.g. a set-top-box 30) and a plurality of user terminals used by different users (e.g. a headphone T_{A} used by user A, a tablet T_{B} used by user B and a smartphone T_{C} used by user C).

In alternative embodiments, the central device is a gateway or a server. The user terminals can be any devices that can be connected to the central device.

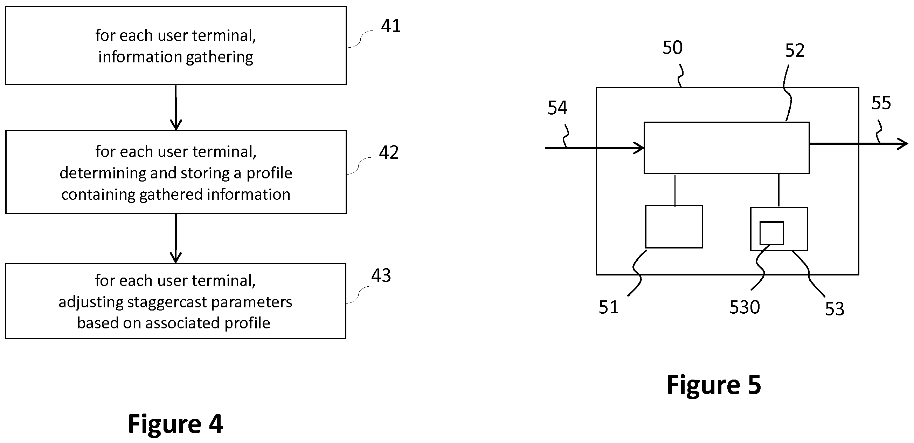

The set-top-box 30 comprises a computation machine 50 (see figure 5) and a staggercast transmitter 100 (see figure 1).

Each of the user terminals T_{A}, T_{B} and T_{C} comprises a staggercast receiver 200_{A}, 200_{B} and 200c respectively.

The downlink transmissions from the staggercast transmitter 100 to the staggercast receiver 200_{A}, 200_{B} and 200c respectively are shown by an arrow referenced 32_{A}, 32_{B} and 32c respectively.

The uplink transmissions from the staggercast receiver 200_{A}, 200_{B} and 200c respectively to the staggercast transmitter 100 are shown by an arrow referenced 33_{A}, 33_{B} and 33c respectively.

**Figure** 4 is a flowchart of a particular embodiment of the proposed method for managing staggercast transmissions. This method is carried out by the central device. In the context of figure 3, it is carried out by the computation machine 50 of the set-top-box 30.

In step 41, for each user terminal T_{A}, T_{B} and T_{C}, the set-top-box 30 performs a dynamical gathering of information, through the uplink transmissions 33_{A}, 33_{B} and 33c (i.e. through communications between the set-top-box 30 and the user terminals T_{A}, T_{B} and Tc). For example, while moving and if there are losses, the loss duration is measured and transmitted by the user terminal to the set-top-box. The same measurement can be applied in case of interferences.

In step 42, for each user terminal T_{A}, T_{B} and T_{C}, the set-top-box 30 determines and stores a profile comprising information relating to at least one specificity of this user terminal and/or to at least one use of this user terminal. For a given user terminal, this information may be (non exhaustive list):
- a minimal duration of signal losses for the given user terminal;
- a maximal duration of signal losses for the given user terminal;
- a power level of a battery comprised in the given user terminal;
- a type of a battery comprised in the given user terminal;
- a type of device for the given user terminal;
- an application executed by the given user terminal;
- using habits relating to a use of the given user terminal by at least one user;
- etc.

In step 43, for each user terminal T_{A}, T_{B} and T_{C}, the set-top-box 30 adjusts at least one staggercast parameter (stagger delay and/or stagger stream resolution), for a content transmission by the staggercast transmitter 100 towards the staggercast receiver 200_{A}, 200_{B} and 200c comprised in this user terminal.

### Use case example

Let's imagine a house with 3 users: user A, user B and user C.

User A has a headphone T_{A} and is connected to the central device 30. He listens to the radio or an mp3 stream stored in the central device. He moves from the kitchen to his room under the roof. In the stairs, the signal is poor, and for 2 seconds it may be very bad. As the staggercast is on, the main signal will be corrected. The loss duration is measured (2 seconds), and is transmitted to the central device. Once he arrives in his room, the signal may be disturbed, but the loss duration never exceeds 2 seconds.

User B has a tablet T_{B}, and he often plays video clips stored in the central device hard drive. He sometimes sits in the living-room and sometimes in his bedroom. His bedroom is on the opposite side of the house compare to the central device. Besides, other wireless devices are disturbing the signal. Thanks to the staggercast he doesn't experience any bad artifacts. The loss duration is measured (1 second) and is transmitted to the central device. The tablet battery is pretty old, and the battery level is quite low (10%). The battery level is also transmitted to the central device.

User C has a smartphone T_{C}. He watches a live program which is retransmitted by the central device. He sits in the garden. The quality signal with the central device is pretty good, and his mobile device transmits a measured loss of duration of 0.5 second. But his mobile device battery is 50% empty. This battery level is transmitted to the central device.

The central device gathers all these pieces of information and creates the below profile table (one profile per user, and also per user terminal considering that each user has his own terminal).

**Profile table**

| User | Loss duration (seconds) | Battery level | Application | Type of device |
|---|---|---|---|---|
| User A | 2 | unknown | unknown | X |
| User B | 1 | 10% | unknown | Y |
| User C | 0.5 | 50% | AVPlayer | Z |

For the next connections, the central device will apply the following settings for the staggercast transmissions:
• for user A, the main signal will be delayed of 2 seconds and the stagger signal will be transcoded with a high resolution;
• for user B, the main signal will be delayed of 1 second, and unless the battery level is good again, the stagger signal will be transcoded with a low resolution;
• for user C, the main signal will be delayed of 0.5 second, and unless the battery level is good again, the stagger signal will be transcoded with a low resolution. These settings are summarized in the following parameter table:

**Staggercast parameter table**

| User | Staggercast delay (seconds) | Stagger stream resolution |
|---|---|---|
| User A | 2 | High |
| User B | 1 | Low |
| User C | 0.5 | Low |

**Figure 5** shows the simplified structure of the computation machine 50 comprised in the set-top-box (central device) 30 according to a particular embodiment of the present principles. The computation machine 50 comprises a non-volatile memory 53 (e.g. a read-only memory (ROM) or a hard disk), a volatile memory 51 (e.g. a random access memory or RAM) and a processor 52. The non-volatile memory 53 is a non-transitory computer-readable carrier medium. It stores executable program code instructions 530, which are executed by the processor 52 in order to enable implementation of the method described above (see figure 4). Upon initialization, the program code instructions 530 are transferred from the non-volatile memory 53 to the volatile memory 51 so as to be executed by the processor 52. The volatile memory 51 likewise includes registers for storing the variables and parameters required for this execution. The inputs 54 comprise gathered information, and the outputs 55 comprise the staggercast parameter table sent to the staggercast transmitter 100.

All the steps of the method described above (see figure 4) can be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it can also be implemented in hardware form or any form combining a hardware portion and a software portion.

## Claims

1. Method for managing staggercast transmissions in a communication network comprising a central device (30) and a plurality of user terminals (T_{A}, T_{B}, Tc), said central device comprising a staggercast transmitter (100) and each of said user terminals comprising a staggercast receiver (200_{A}, 200_{B}, 200c), **characterized in that** said central device performs, at least for a given user terminal:
- determining and storing (42) a profile comprising at least one piece of information relating to said given user terminal; and
- adjusting (43) at least one staggercast parameter based on said profile, for a content transmission by said staggercast transmitter towards the staggercast receiver comprised in said given user terminal.

2. Method according to claim 1, wherein said at least one piece of information belongs to the group comprising:
- pieces of information relating to at least one specificity of said given user terminal; and
- pieces of information relating to at least one use of said given user terminal.

3. Method according to any one of the claims 1 to 2, wherein said central device (30) belongs to the group comprising a set-top-box, a gateway and a server.

4. Method according to any one of the claims 1 to 3, wherein said at least one staggercast parameter belongs to the group comprising:
- a stagger delay, between a transmission of a stagger stream and a transmission of a delayed main stream; and
- a stagger stream resolution.

5. Method according to any one of the claims 1 to 4, wherein said at least one piece of information belongs to the group comprising:
- a minimal duration of signal losses for said given user terminal;
- a maximal duration of signal losses for said given user terminal;
- a power level of a battery comprised in said given user terminal;
- a type of a battery comprised in said given user terminal;
- a type of device for said given user terminal;
- an application executed by said given user terminal; and
- using habits relating to a use of said given user terminal by at least one user.

6. Method according to any one of the claims 1 to 5, wherein said central device performs a dynamical gathering (41) of said at least one piece of information, through a communication between said central device and said given user terminal.

7. Computer program product (530) **characterized in that** it comprises program code instructions for implementing the method according to any one of the claims 1 to 6, when said program is executed on a computer (52) or a processor.

8. Non-transitory computer-readable carrier medium (53) storing a computer program product (530) according to claim 7.

9. Central device (30) of a communication network comprising said central device and a plurality of user terminals (T_{A}, T_{B}, T_{C}), said central device comprising a staggercast transmitter (100) and each of said user terminals comprising a staggercast receiver (200_{A}, 200_{B}, 200c), **characterized in that** said central device comprises a computation machine (50) configured to:
- determine and store, at least for a given user terminal, a profile comprising at least one piece of information relating to said given user terminal; and
- adjust at least one staggercast parameter based on said profile, for a content transmission by said staggercast transmitter towards the staggercast receiver comprised in said given user terminal.

10. Central device according to claim 9, wherein said at least one piece of information belongs to the group comprising:
- pieces of information relating to at least one specificity of said given user terminal; and
- pieces of information relating to at least one use of said given user terminal.

11. Central device according to any one of the claims 9 to 10, belonging to the group comprising a set-top-box, a gateway and a server.

12. Central device according to any one of the claims 9 to 11, wherein said at least one staggercast parameter belongs to the group comprising:
- a stagger delay, between a transmission of a stagger stream and a transmission of a delayed main stream; and
- a stagger stream resolution.

13. Central device according to any one of the claims 9 to 12, wherein said at least one piece of information belongs to the group comprising:
- a minimal duration of signal losses for said given user terminal;
- a maximal duration of signal losses for said given user terminal;
- a power level of a battery comprised in said given user terminal;
- a type of a battery comprised in said given user terminal;
- a type of device for said given user terminal;
- an application executed by said given user terminal; and
- using habits relating to a use of said given user terminal by at least one user.

14. Central device according to any one of the claims 9 to 13, wherein said computation machine is configured to perform a dynamical gathering of said at least one piece of information, through a communication between said central device and said given user terminal.
